# EUROPÄISCHE PATENTSCHRIFT

(11) **EP 3 271 787 B1**
(45) Veröffentlichungstag und Bekanntmachung des Hinweises auf die Patenterteilung: **23.09.2020**
(21) Anmeldenummer: 16730247.0
(22) Anmeldetag: 18.03.2016
(51) Int. Cl.: G05D 1/02

(54) **ONLINE-KALIBRIERUNGSPRÜFUNG WÄHREND DES BETREIBENS EINES AUTONOMEN FAHRZEUGS**
ON-LINE CALIBRATION TESTING DURING THE OPERATION OF AN AUTONOMOUS VEHICLE
CONTRÔLE D'ÉTALONNAGE EN LIGNE PENDANT LE FONCTIONNEMENT D'UN VÉHICULE AUTONOME

(30) Priorität: 20.03.2015 DE 102015205088
(43) Veröffentlichungstag der Anmeldung: 24.01.2018
(73) Patentinhaber: KUKA Deutschland GmbH, 86165 Augsburg (DE)
(72) Erfinder: KÜMMERLE, Rainer, 86159 Augsburg (DE); MEYER-DELIUS, Daniel, 81541 München (DE); PFAFF, Patrick, 86163 Augsburg (DE)
(74) Vertreter: Tillmann, Axel
(86) Internationale Anmeldenummer: PCT/EP2016/000486
(87) Internationale Veröffentlichungsnummer: WO 2016/150563

(56) Entgegenhaltungen:
- DE-A1-102011 120 535

## Beschreibung

### Technischer Bereich

Die vorliegende Erfindung betrifft ein Verfahren zum Ermitteln eines Kalibrierungsparameters eines Fahrzeugs. Ferner betrifft die vorliegende Erfindung ein entsprechendes Fahrzeug, und insbesondere ein entsprechendes fahrerloses Transportfahrzeug.

### Technischer Hintergrund

In modernen Produktionsbetrieben werden häufig fahrerlose Transportsysteme eingesetzt um beispielsweise Material oder Werkstücke von einer Station zu einer nächsten zu transportieren. In einem anderen Beispiel können fahrerlose Transportsysteme auch eingesetzt werden, um Manipulatoren oder Industrieroboter in einer Werkshalle zu bewegen. Im Allgemeinen sind fahrerlose Transportsysteme Fördersysteme, welche zumindest ein fahrerloses Transportfahrzeug umfassen. Ein fahrerloses Transportsystem kann beispielsweise ein Roboterfahrzeug umfassen, welche multi-direktional und insbesondere omni-direktional beweglich ist. Zu diesem Zweck können solche Fahrzeuge beispielsweise omni-direktionale Räder aufweisen, welche somit eine hohe Beweglichkeit ermöglichen. Der Koordinatenursprung solcher omni-direktional beweglichen Fahrzeuge ist meistens im Drehzentrum des Fahrzeugs festgelegt, kann aber je nach Kinematik auch frei gewählt werden.

Fahrerlose Transportfahrzeuge sind dadurch ausgezeichnet, dass sie automatisch geführt werden, also beispielsweise durch eine fahrzeuginterne Steuereinrichtung gesteuert werden. Die Bewegung, also unter anderem die Bewegungsrichtung und Bewegungsgeschwindigkeit, werden also programmgesteuert. Damit die fahrerlosen Transportsysteme eigenständig mobil sein können, sind sie häufig mit Einrichtungen zur Standortbestimmung und Lageerfassung ausgestattet.

Unter einer Kalibrierung autonomer Fahrzeuge versteht man unter anderem die Bestimmung der Einbauposition der zur Navigation verwendeten Sensoren relativ zum Koordinatenursprung des verwendeten Fahrzeugs. Ferner kann mittels einer Kalibrierung eine eventuelle Einschränkung des Sichtbereichs der Sensoren abgeleitet werden, wodurch beispielsweise verhindert wird, dass die Sensoren das Fahrzeug selbst erfassen und entsprechende Kollisionswarnung erzeugt werden.

Zur Bestimmung der Kalibrierung sind mehrere Verfahren bekannt. Bei einer externen Vermessung werden mittels hochpräziser Messgeräte manuell die Positionen der an dem Fahrzeug angebrachten Sensoren relativ zum Fahrzeug vermessen. Allerdings ist dieses Verfahren sehr zeitaufwendig, teuer und benötigt diese zusätzlichen Messgeräte.

Ferner ist eine Überprüfung der Kalibrierung im Betriebsmodus des fahrerlosen Transportsystems nicht möglich.

In einem anderen Verfahren wird die Kalibrierung durchgeführt indem das Fahrzeug bewegt wird und die aus der Bewegung und der Sensorposition erwarteten Messungen mit der tatsächlichen Bewegung des Fahrzeugs verglichen werden. Derartige Verfahren sind beispielsweise aus dem wissenschaftlichen Artikel "Automatic Calibration of Multiple Coplanar Systems" von J. Brookshire und S. Teller bekannt, welcher 2011 in "Robotics: Science and Systems" veröffentlicht wurde. In diesem Verfahren wird mittels Laserscanner die Umgebung während einer Bewegung des Fahrzeugs wahrgenommen, und die entsprechenden Entfernungsmessungen dazu eingesetzt mittels eines sogenannten Scan-Matching-Verfahrens oder Scan-Matching-Prozesses die Eigenbewegung des Laserscanners zu bestimmen.

Die Druckschrift DE 10 2011 120 535 A1 zeigt ein Verfahren zum Einstellen zumindest eines Sensors eines Fahrzeuges anhand der ermittelten Positionen von Objekten, die durch den Sensor erfasst wurden.

Es ist somit eine Aufgabe der vorliegenden Erfindung ein Verfahren bereitzustellen, mit welchem eine Kalibrierung eines autonomen Fahrzeugs mit einer hohen Präzision durchgeführt werden kann.

Diese und weitere Aufgaben, die beim Lesen der folgenden Beschreibung ersichtlich werden, werden mit den Merkmalen der Hauptansprüche 1 und 9, und den Merkmalen der Nebenansprüche gelöst.

### Inhalt der Erfindung

Die vorliegende Erfindung betrifft ein Verfahren zum Ermitteln eines Kalibrierungsparameters eines Fahrzeugs, und insbesondere eines fahrerlosen Transportfahrzeugs. Das fahrerlose Transportfahrzeug kann beispielsweise in einem fahrerlosen Transportsystem eingesetzt werden. Hierzu weist das Fahrzeug zumindest einen ersten und einen zweiten Sensor auf. Der Kalibrierungsparameter ermöglicht dabei eine Bestimmung einer Position von zumindest einem der Sensoren relativ zu einem Koordinatenursprung des Fahrzeugs.

Das erfindungsgemäße Verfahren weist ein Erfassen von Strukturen mittels der zumindest zwei Sensoren auf. Vorzugsweise werden dabei Strukturen in der Umgebung des Fahrzeugs oder auch in dem Raum erfasst, in welchem sich das Fahrzeug befindet.

Somit werden beispielsweise Objekte in der Umgebung des Fahrzeugs erfasst, oder auch Umgebungsgrenzen, wie beispielsweise Wände. In einem weiteren Schritt wird bestimmt, ob die von den zwei Sensoren erfassten Strukturen zumindest teilweise übereinstimmen. Es wird also überprüft, ob Strukturen, die mittels des ersten Sensors erfasst wurden, zumindest teilweise mit den Strukturen übereinstimmen, die mit dem zweiten Sensor erfasst wurden. Es wird somit indirekt überprüft, ob der Sichtbereich von zwei Sensoren zumindest teilweise übereinstimmt bzw. überlappt.

Weiterhin umfasst das Verfahren ein Berechnen einer relativen Position von zumindest dem ersten Sensor zum zweiten Sensor, wobei dieses Berechnen vorzugsweise nach dem Schritt des Bestimmens, ob die erfassten Strukturen zumindest teilweise übereinstimmen, erfolgt. Dieses Berechnen basiert dabei auf den erfassten, übereinstimmenden Strukturen. Es wird also berechnet, wo sich der erste Sensor in Bezug zum zweiten Sensor befindet, bzw. wo sich der zweite Sensor in Bezug auf den ersten Sensor befindet. Für diese Berechnung werden zumindest die mit den zwei Sensoren erfassten Strukturen verwendet, für welche eine Übereinstimmung bestimmt wurde. Danach wird der Kalibrierungsparameter unter Verwendung von zumindest der berechneten relativen Position von dem ersten Sensor zum zweiten Sensor ermittelt.

Mittels des erfindungsgemäßen Verfahrens wird selbstständig ermittelt, ob das Sichtfeld zweier Sensoren zumindest teilweise überlappt. Wenn somit festgestellt wird, dass die Sensoren beispielsweise zumindest teilweise die gleichen Teile der Umgebung wahrnehmen, wird direkt die relative Position zwischen den zwei Sensoren bestimmt.

Diese Messung fließt mit in die Kalibrierung ein, und verbessert somit die Schätzung bzw. Bestimmung der Kalibrierungsparameter. Somit wird die Bestimmung der Einbauposition der Sensoren, welche auch zur Navigation des fahrerlosen Transportfahrzeugs verwendet werden, verfeinert. Die Verwendung der relativen Transformation zwischen den Sensoren ermöglicht dabei eine Stabilisierung dergesuchten Transformation der Sensorpositionen zum Koordinatenursprung (beispielsweise Rotationsmittelpunkt) des Fahrzeugs, da der Bestimmungsgrad des Kalibrierungsparameters aufgrund der nun zusätzlich bekannten Transformation zwischen den zwei Sensoren untereinander erhöht wird.

Vorzugsweise weist das erfindungsgemäße Verfahren ferner ein Erfassen einer Bewegung des Fahrzeugs auf. Vorzugsweise basiert diese Erfassung einer Bewegung des Fahrzeugs auf Odometrie, also basierend auf Daten des Forttriebsystems des Fahrzeugs. Vorzugsweise dienen der zumindest eine und zweite Sensor dabei nicht für die Erfassung der Bewegung des Fahrzeugs, so dass ferner vorzugsweise die Erfassung der Bewegung des Fahrzeugs basierend auf Odometrie nicht unter Verwendung des zumindest einen und zweiten Sensors erfolgt. Ferner erfolgt das Ermitteln des Kalibrierungsparameters vorzugsweise auch unter Verwendung der erfassten Bewegung des Fahrzeugs. So wird beispielsweise durch die Odometrie des Fahrzeugs eine Bewegung des Fahrzeugs ermittelt, und diese Messung für die Kalibrierung des Fahrzeugs verwendet. Die Effizienz und Genauigkeit eines sogenannten Scan-Matching-Verfahrens wird dadurch erhöht. Vorzugsweise erfolgt die Durchführung eines solchen Scan-Matching-Prozesses unmittelbar nach dem Erfassen der Umgebungsdaten mittels der Sensoren und weiter vorzugsweise unmittelbar nach Erfassen einer Fahrzeugbewegung.

Das erfindungsgemäße Verfahren weist ferner ein Berechnen einer Bewegung des Fahrzeugs auf, wobei diese Berechnung auf den erfassten Strukturen basiert. Die Sensoren nehmen somit während einer Bewegung des Fahrzeugs die Umgebung wahr und erlauben, die Eigenbewegung der Sensoren, bzw. letztendlich die des Fahrzeugs, zu bestimmen. Vorzugsweise erfolgt das Ermitteln des Kalibrierungsparameters ferner unter Verwendung dieser basierend auf den erfassten Strukturen berechneten Bewegung des Fahrzeugs. Somit kann mittels eines sogenannten Scan-Matching-Prozesses effizient eine Schätzung bzw. Bestimmung für die relative Transformation zwischen den Sensoren durchgeführt werden, welche wiederum eine genaue Ermittlung des Kalibrierungsparameters zulässt. Vorzugsweise kann basierend auf der somit erfassten Eigenbewegung der Sensoren eine Transformation von dem Sensor zu dem Koordinatenursprung des Fahrzeugs oder ferner vorzugsweise zum Odometrie-Zentrum des Fahrzeugs berechnet werden.

Vorzugsweise erfolgt das Ermitteln des Kalibrierungsparameters ferner unter Verwendung der mittels der zumindest zwei Sensoren erfassten Strukturen. Es sind somit mit dem erfindungsgemäßen Verfahren keine externen Messgeräte notwendig, sondern es werden vorteilhaft die von dem Fahrzeug oder von dem fahrerlosen Transportfahrzeug zur Navigation verwendeten Sensoren verwendet. Der Kalibrierungsparameter kann somit beispielsweise ermittelt werden, indem aus den Sensoren, den Strukturen, dem Fahrzeugmittelpunkt dem Rotationspunkt des Fahrzeugs und/oder dem Koordinatenursprung des Fahrzeugs entsprechende Relationen aufgespannt werden und mittels beispielsweise trigonometrischer Berechnungen entsprechende Winkel und/oder Distanzen ermittelt werden. Hierzu kann beispielsweise eine kinematische Kette aufgestellt werden, bestehend aus der Fahrzeugposition (basierend z.B. auf Odometrie) und Sensorposition (basierend z.B. auf Sensormessungen) jeweils zu zwei verschiedenen Zeitpunkten t1 und t2. Dabei wird die Fahrzeugposition vorzugsweise unabhängig von der Sensorposition erfasst.

Vorzugsweise sind die zumindest zwei Sensoren dazu eingerichtet, eine Abstandsmessung zu einer Umgebung des Fahrzeugs durchzuführen. Dabei können die zumindest zwei Sensoren vorzugsweise Laserscanner, Stereokameras und/oder Flugzeitkameras umfassen, welche allesamt vorzugsweise die Durchführung von Abstandsmessungen zulassen. Ferner vorzugsweise umfasst das Erfassen der Strukturen ein Durchführen einer Abstandsmessung zu einer Umgebung des Fahrzeugs. Mittels der zumindest zwei Sensoren werden also Abstandsmessungen durchgeführt, um Objekte im Raum zu erfassen bzw. zu erkennen. Da diese Sensoren vorzugsweise auch für den Betrieb des Fahrzeugs verwendet werden, beispielsweise für die Navigation des Fahrzeugs eingesetzt werden, kann der Kalibrierungsparameter effizient auch während des Betriebs des Fahrzeugs durchgeführt werden, und zwar mit den ohnehin vorhandenen Sensoren, so dass keine zusätzlichen Sensoren notwendig sind.

Vorzugsweise wird das Erfassen von Strukturen während eines Stillstandes des Fahrzeugs durchgeführt. Somit können Aliasing-Effekte bei der Bestimmung, ob die erfassten Strukturen zumindest teilweise übereinstimmen, vermieden werden.

Alternativ kann das Erfassen von Strukturen auch bei einer reduzierten Geschwindigkeit durchgeführt werden, um solche Aliasing-Effekte zumindest zu verringern.

Vorzugsweise erlaubt die Transformation zwischen der Einbauposition eines Sensors und des Koordinatenursprungs des Fahrzeugs, die mit dem Sensor erfassten Strukturen mit einer Bewegung des Fahrzeugs oder einer Orientierung des Fahrzeugs zu verknüpfen. Ein besonderer Vorteil des erfindungsgemäßen Verfahrens ist, dass die initiale Einbauposition eines Sensors (relativ zum Koordinatensystem des Fahrzeugs) nicht bekannt sein muss; sie kann vollständig und automatisch mittels des erfindungsgemäßen Verfahrens ermittelt werden. Vorzugsweise umfasst der Kalibrierungsparameter weitere Parameter, wie beispielsweise eine Einschränkung des Sichtbereichs eines Sensors, bzw. eine Maskierung des Sensors. Somit kann vorteilhaft gewährleistet werden, dass die erfassten Strukturen nicht vom Fahrzeug selbst herrühren.

Vorzugsweise können anhand zumindest einem der zumindest zwei Sensoren und dem Kalibrierungsparameter eine Position und eine Orientierung des Fahrzeugs bestimmt werden. Somit umfasst der Kalibrierungsparameter beispielsweise Informationen bzgl. der Positionen der Sensoren, welche für eine Positions- und Orientierungsbestimmung des Fahrzeugs herangezogen werden können.

Vorzugsweise umfasst das Bestimmen, ob die erfassten Strukturen zumindest teilweise übereinstimmen, ein Bestimmen, ob eine Überlappung der Sichtfelder der zumindest zwei Sensoren vorliegt. Hierzu kann beispielsweise überprüft werden, ob die in einem Teilwinkelbereich eines ersten Sensors erfassten Strukturen auch von einem zweiten Sensor erfasst werden. Dieser Teilwinkelbereich kann dabei vorzugsweise zumindest 10°, weiter vorzugsweise zumindest 20° und ferner vorzugsweise zumindest 30° sein.

Die innerhalb eines solchen Teilwinkelbereichs erfassten Strukturen müssen dabei vorzugsweise nicht zu 100% übereinstimmen, sondern müssen weiter vorzugsweise zumindest zu 90% oder ferner vorzugsweise zumindest zu 80% übereinstimmen. Somit kann effektiv und schnell überprüft werden, ob die zwei Sensoren zumindest teilweise die gleichen Teile der Umgebung wahrnehmen. Vorzugsweise wird für die Ermittlung des Kalibrierungsparameters eine Methode der kleinsten Quadrate verwendet, der gesuchte Parameter also durch Mitteln über mehrere Zeitschritte bestimmt. Da sowohl die Odometrie als auch der Scan-Matching-Prozess mit Rauschen behaftet sein können, wird somit die Präzision des Verfahrens und folglich die Genauigkeit des Kalibrierungsparameters weiter verbessert.

Vorzugsweise wird eine Sensormessung verworfen, wenn das Ergebnis des Scan-Matching-Prozesses weit von einem erwarteten Ergebnis abweicht. Das erwartete Ergebnis kann dabei beispielsweise auf einer bestehenden (früheren) Kalibrierung beruhen.

Vorzugsweise weist das Fahrzeug mehr als zwei Sensoren auf. Zur Durchführung des erfindungsgemäßen Verfahrens werden Paare von Sensoren gebildet, und das erfindungsgemäße Verfahren vorzugsweise für alle Paare von Sensoren durchgeführt.

Vorzugsweise wird während einer Inbetriebnahmephase oder Kalibrierungsfahrt ein Kalibrierungsparameter so lange ermittelt oder aktualisiert oder verfeinert, bis eine zuvor festgesetzte Güte der Kalibrierung erreicht wurde. Die Kalibrierung wird fortlaufend bestimmt, bis ein vorbestimmtes Kriterium zum Abbruch der Kalibrierung erreicht wurde. Vorzugsweise kann das Kriterium eine verbleibende Restunsicherheit in der Parameterermittlung, eine Zeitvorgabe oder eine Anzahl durchzuführender Ermittlungen des Kalibrierungsparameters umfassen. Vorzugsweise wird auch nach abgeschlossener Kalibrierung der Kalibrierungsparameter weiter bestimmt, wie etwa in vorgegebenen Zeitabständen, und zur Überwachung oder Überprüfung der Kalibrierung herangezogen.

Vorzugsweise kann der ermittelte Kalibrierungsparameter dazu verwendet werden, eine bestehende Kalibrierung des Fahrzeugs zu überwachen bzw. zu überprüfen.

Folglich wird vorzugsweise der ermittelte Kalibrierungsparameter in einem weiteren Schritt mit zumindest einem bestehenden Kalibrierungsparameter verglichen. Dieser bestehende Kalibrierungsparameter wurde vorzugsweise in einem vorangegangenem Kalibrierungsschritt erstellt, und wird im operativen Betrieb des Fahrzeugs verwendet.

Während einer solchen Überwachung bzw. Überprüfung kann das Fahrzeug normal operieren, da die Überwachung im Hintergrund durchgeführt wird und nicht aktiv in die Steuerung des Fahrzeugs eingreifen muss. Für den Vergleich der ermittelten Kalibrierungsparameter mit der bestehenden Kalibrierung kann beispielsweise eine sogenannte Kullback-Leibler-Divergenz, eine sogenannte Mahanalobis-Distanz und/oder vergleichbare Techniken verwendet werden. Wenn eine Abweichung vorliegt, kann automatisch ein Bediener bzw. Operator informiert werden, und ggf. das Fahrzeug gestoppt werden, wenn die Abweichung einen entsprechenden vordefinierten Grenzwert überschreitet. Ferner vorzugsweise kann die Überwachung auch basierend auf den Abständen zwischen den Sensormessungen bei Bewegung des Fahrzeugs basieren. Die vorliegende Erfindung erlaubt somit auch eine Detektion von Verletzungen von Annahmen eines vorherigen Kalibrierverfahrens. Somit kann beispielsweise detektiert werden, dass die Scanebenen der Sensoren nicht horizontal sind, die Sensoren nicht auf gleicher Höhe eingebaut sind, und/oder dass der Sichtbereich eines oder mehrerer Sensoren das Fahrzeug selbst umfasst.

Ferner betrifft die vorliegende Offenbarung ein Verfahren zum Überwachen eines bestehenden Kalibrierungsparameters eines Fahrzeugs, und insbesondere eines fahrerlosen Transportfahrzeugs, wobei das Fahrzeug zumindest einen ersten und einen zweiten Sensor aufweist, und wobei der bestehende Kalibrierungsparameter eine Bestimmung einer Position von zumindest einem der Sensoren relativ zu einem Koordinatenursprung des Fahrzeugs ermöglicht. Der bestehende Kalibrierungsparameter wurde dabei vorzugsweise während eines vorangegangenen Kalibrierungsschrittes bestimmt, und wird ferner vorzugsweise während eines Betriebs des Fahrzeugs zur Steuerung desselben verwendet. Folglich wird das Verfahren zum Überwachen vorzugsweise im Betriebsmodus des Fahrzeugs angewendet, um eine vorherige Kalibrierung zu überprüfen.

Das Verfahren umfasst dabei ein Erfassen einer Bewegung des Fahrzeugs basierend auf Odometrie, ein Erfassen von Strukturen mittels der zumindest zwei Sensoren zu einem ersten Zeitpunkt t1, und ein Erfassen von Strukturen mittels der zumindest zwei Sensoren zu einem zweiten Zeitpunkt t2. Vorzugsweise ist das Fahrzeug in Bewegung, und der erste Zeitpunkt t1 ist verschieden von dem zweiten Zeitpunkt t2. Folglich befindet sich das Fahrzeug während dem Erfassen der Strukturen zu den zwei Zeitpunkten t1 und t2 vorzugsweise an unterschiedlichen Positionen im Raum.

Ferner wird gemäß des erfindungsgemäßen Verfahrens zum Überwachen überprüft, ob ein Unterschied zwischen den erfassten Strukturen zum ersten Zeitpunkt t1 und den erfassten Strukturen zum Zeitpunkt t2 der erfassten Bewegung des Fahrzeugs entspricht. Somit kann effizient und direkt erkannt werden, ob beispielsweise (aufgrund des bestehenden Kalibrierungsparameters) ein Sichtbereich eines Sensors das Fahrzeug selbst umfasst, welches eine Verletzung einer Annahme während des vorangegangenen Kalibrierungsschrittes bedeuten kann. Somit können derartige Annahmen direkt während des Betriebs des Fahrzeugs überprüft werden. Wenn bspw. basierend auf der Odometrie eine Fahrzeugtranslationsbewegung zwischen t1 und t2 von einem Meter festgestellt wurde, müssen Strukturen in Bewegungsrichtung des Fahrzeugs zum Zeitpunkt t2 von den Sensoren als einen Meter näher erfasst werden als zum Zeitpunkt t1. Andernfalls kann ein fehlerhafter Kalibrierungsparameter vorliegen bzw. ein Fehler in der Odometrie.

Vorzugsweise kann zur Überprüfung einer bestehenden Kalibrierung, vorzugsweise unter Verwendung des ermittelten und/oder bestehenden Kalibrierungsparameters, ein sogenanntes Occupancy-mapping durchgeführt werden. Hierzu werden basierend auf der Odometrie, den Sensordaten und/oder dem bzw. den vorzugsweise entsprechend bereitgestellten Kalibrierungsparameter(n) lokale Karten aufgebaut, wobei die Entropie der auf diese Weise erzeugten Karten ein Kriterium für die Validität der Kalibrierungsparameter liefert. Die Messungen der Sensoren werden in ein Grid, und vorzugsweise ein 2D-Grid eingetragen. Für jede Zelle in dem Grid wird anschließend analysiert, wie oft eine Messung eines Sensors diese Zelle passiert oder in dieser endet. Aus Inkonsistenzen in der Belegungswahrscheinlichkeit, vorzugsweise während der Bewegung des Fahrzeugs, kann anschließend beispielsweise auf eine fehlerhafte Kalibrierung rückgeschlossen werden. Diese unabhängige Überprüfung der Güte der Kalibrierung kann vorzugsweise gleichzeitig zur wiederholten Anwendung der Ermittlung des Kalibrierungsparameters durchgeführt werden, um beispielsweise Verletzungen von Annahmen des Kalibrierungsverfahrens zu detektieren. Folglich kann auch auf Fehler in der Odometrie geschlossen werden und ein entsprechender Bediener oder Operator automatisch informiert werden.

Weiterhin betrifft die vorliegende Erfindung ein Fahrzeug und insbesondere ein fahrerloses Transportfahrzeug, welches zumindest einen ersten und einen zweiten Sensor aufweist. Das Fahrzeug weist dabei ferner eine Steuerung auf, welche eingerichtet ist, ein erfindungsgemäßes Verfahren zum Ermitteln eines Kalibrierungsparameters des Fahrzeugs durchzuführen.

Vorzugsweise sind die zumindest zwei Sensoren dabei eingerichtet eine Abstandsmessung zu einer Umgebung des Fahrzeugs durchzuführen. Ferner vorzugsweise stimmt ein Sichtbereich des ersten Sensors mit einem Sichtbereich des zweiten Sensors zumindest teilweise überein. Vorzugsweise umfassen die zumindest zwei Sensoren Laserscanner, Stereokameras und/oder Flugzeitkameras. Diese Aufzählung ist dabei nicht abschließend, generell können alle Sensoren verwendet werden welche sich zum Ermitteln von Strukturen der Umgebung des Fahrzeugs eignen.

Vorzugsweise weist das erfindungsgemäße Fahrzeug weiterhin zumindest einen Odometrie-Sensor auf, mit welchen eine Bewegung des Fahrzeugs, basierend auf Odometrie, erfasst werden kann. Der Fachmann versteht dabei, dass verschiedene Aspekte der oben beschriebenen Verfahren und des oben beschriebenen Fahrzeugs kombiniert werden können, und dass sich verschiedenen Aspekte der Offenbarung nicht notwendigerweise gegenseitig ausschließen.

### Figurenbeschreibung

Im Folgenden wird die vorliegende Erfindung unter Bezugnahme auf die beiliegenden Figuren näher beschrieben. Dabei zeigen:
Figuren 1 und 2 schematisch den Ablauf eines Scan-Matching-Prozesses im Sinne der vorliegenden Erfindung, und
Figur 3 schematisch den Ablauf des erfindungsgemäßen Verfahrens.

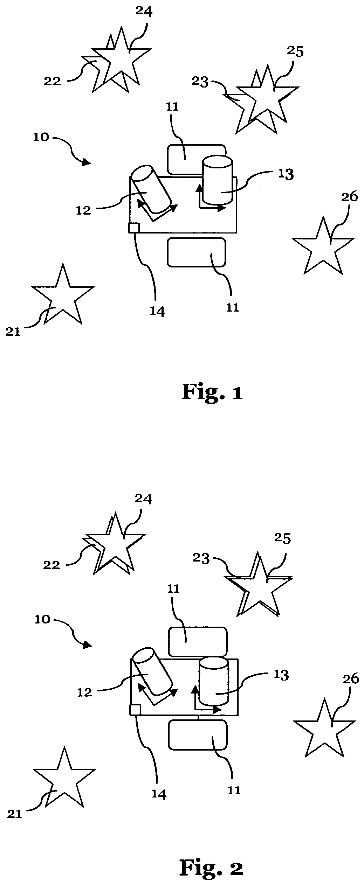

In der Figur 1 ist schematisch ein Fahrzeug 10 dargestellt, welches mit einem ersten Sensor 12 und einem zweiten Sensor 13 ausgestattet ist. Wie in der Figur 1 zu sehen, sind die beiden Sensoren 12, 13 an unterschiedlichen Positionen auf dem Fahrzeug 10 montiert und weisen zudem verschiedene Koordinatensysteme auf. Ferner weist das Fahrzeug 10 zwei Räder 11 auf, welche mit entsprechenden Odometrie-Sensoren ausgestattet sind um basierend auf Odometrie eine Eigenbewegung des Fahrzeugs bestimmen zu können. Diese Bestimmung der Fahrzeugeigenbewegung als auch die Regelung der Sensoren 12, 13 wird von einer Steuerung 14 durchgeführt. Diese Steuerung 14 ist dabei eingerichtet das erfindungsgemäße Verfahren zum Ermitteln eines Kalibrierungsparameters des Fahrzeugs 10 durchzuführen.

Mittels des ersten Sensors 12 werden beispielsweise die Objekte oder Strukturen 21, 22, 23 in der Umgebung des Fahrzeugs 10 erfasst, während mittels des zweiten Sensors 13 beispielsweise die Strukturen oder Objekte 24, 25, 26 in der Umgebung des Fahrzeugs 10 erfasst werden. Mittels des erfindungsgemäßen Verfahrens wird erkannt, dass die Merkmale 22 und 24 als auch 23 und 25 miteinander übereinstimmen.

Wie in der Figur 2 dargestellt, erlaubt die Durchführung des Scan-Matching-Prozesses eine Schätzung bzw. Bestimmung für die relative Transformation zwischen den Sensoren 12, 13. Hier wurden die mittels des zweiten Sensors 13 aufgenommenen bzw. erfassten Objekte 24, 25, 26 entsprechend verschoben. Dementsprechend wurde auch eine relative Position des zweiten Sensors 13 bzgl. des ersten Sensors 12 berechnet. Basierend auf dieser berechneten relativen Position zwischen den zwei Sensoren 12, 13 wurde die Kalibrierung des Fahrzeugs aktualisiert, wodurch die Einbauposition des Sensors 13 verfeinert wurde. Wie im Vergleich mit der Figur 1 zu sehen, wurde in der Figur 2 ein neuer Kalibrierungsparameter angewendet, und somit die in der Steuerung 14 hinterlegte Position des zweiten Sensors 13 in Bezug auf das Koordinatensystem des Fahrzeugs aktualisiert.

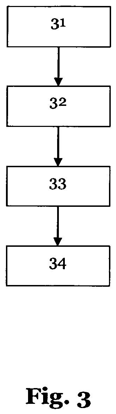

In Figur 3 ist der Ablauf des erfindungsgemäßen Verfahrens zum Ermitteln eines Kalibrierungsparameters eines Fahrzeugs schematisch dargestellt. Das Fahrzeug weist dabei zumindest einen ersten und einen zweiten Sensor auf, wie beispielsweise die Sensoren 12, 13 des Fahrzeugs 10 aus Figuren 1 und 2. Im Schritt 31 werden mittels der zumindest zwei Sensoren Strukturen in der Umgebung des Fahrzeugs erfasst. Beispielsweise können die Strukturen 21, 22, 23, 24, 25, 26 der Figuren 1 und 2 durch die zumindest zwei Sensoren erfasst werden.

Im Schritt 32 wird bestimmt, ob die erfassten Strukturen zumindest teilweise übereinstimmen. Hierzu kann beispielsweise überprüft werden, ob eine Überlappung der Sichtfelder der zumindest zwei Sensoren vorliegt. Hierzu kann beispielsweise ein Winkelbereich von 30° betrachtet werden, und nach einem Abgleich der Sensoren die entsprechende Kovarianz betrachtet werden. Die Betrachtung der Kovarianz vor dem Hintergrund eines vorbestimmten Schwellenwertes kann somit verwendet werden, um zu bestimmen, ob eine Überlappung der Sichtfelder der zumindest zwei Sensoren vorliegt oder nicht. Insbesondere kann durch Betrachtung der Kovarianz sichergestellt werden, dass eine Übereinstimmung zwischen den zwei Sensoren ein stabiles Ergebnis liefert. Dabei kann beispielsweise eine einzelne Linie als erfasste Struktur zu einer großen Unsicherheit entlang dieser Linie führen. Das Erkennen und Filtern dieser unstabilen Übereinstimmung ist folglich besonders vorteilhaft für die Ermittlung eines verlässigen Kalibrierungsparameters. Hierzu kann beispielsweise überprüft werden, ob die in einem Winkelbereich des ersten Sensors erfassten Strukturen auch mittels dem zweiten Sensor erfasst werden, also ob ein übereinstimmender Winkelbereich der Sichtbereiche vorliegt. Bezogen auf die Darstellung aus den Figuren 1 und 2 wurde beispielsweise festgestellt, dass ein Winkelbereich des ersten Sensors 12, in welchem Winkelbereich sich die Objekte oder Strukturen 22 und 23 befinden, mit einem Winkelbereich des zweiten Sensors 13, in welchem Winkelbereich sich die Objekte oder Strukturen 24 und 25 befinden, übereinstimmt.

Im Schritt 33 wird anschließend eine relative Position von zumindest dem ersten Sensor zum zweiten Sensor berechnet, wobei dieses basierend auf den erfassten, übereinstimmenden Strukturen erfolgt. Hierzu können beispielsweise trigonometrische Verfahren angewendet werden.

Im Schritt 34 wird der Kalibrierungsparameter, unter Verwendung von zumindest der berechneten relativen Position der zumindest zwei Sensoren, ermittelt. Beispielsweise kann hierzu auch die Bewegung des Fahrzeugmittelpunktes, welche beispielsweise mittels Odometrie erfasst wurde, einbezogen werden. Um Fehler durch eventuell auftretendes Rauschen zu mindern, kann ein Masse-Feder-System verwendet werden.

Hierbei wird die Bewegung des Fahrzeugmittelpunktes und die Bewegung zumindest eines Sensors betrachtet und eine entsprechende kinematische Kette gebildet. Nach dem Aufmultiplizieren der entsprechenden Bewegungsmatrizen kann eine Abweichung des Ergebnisses von der erwarteten Identitätsmatrix verwendet werden, um beispielsweise ein Rauschen zu unterdrücken.

Vorzugsweise unterbricht oder verlangsamt das Fahrzeug seine Fahrt um die Strukturen mittels der Sensoren zu erfassen. Durch Abfahren einer oder mehrerer Kurven kann die Ermittlung des Kalibrierungsparameters vorzugsweise weiter unterstützt werden. So kann durch Betrachtung einer entsprechenden Fahrzeugeigenbewegung, welche beispielsweise mittels Odometrie bestimmt wird, und einer Sensoreigenbewegung, welche basierend auf den erfassten Strukturen bestimmt wird, der Kalibrierungsparameter ermittelt werden.

In einem weiteren bevorzugten Ausführungsbeispiel kann simultan zur Ermittlung eines Kalibrierungsparameters die Validität der Kalibrierung überwacht werden. Hierzu werden mittels einer Odometrie des Fahrzeugs, Lasermessungen und einem aktuellen Kalibrierungsparameter lokale Karten aufgebaut, welche in Gridzellen unterteilt ist. Für jede Zelle in dem Grid wird analysiert, wie oft ein Laserstrahl der Lasermessung diese Gridzelle passierte, und wie oft eine Lasermessung in dieser Gridzelle endete. Es wird somit überprüft, für welche Zellen in dem Grid eine Lasermessung durchgeführt wurde. Wenn beispielsweise zwei Laserscanner auf unterschiedlichen Höhen in dem Fahrzeug eingebaut sind, kann beispielsweise durch einen Scanner ein Objekt detektiert werden, während ein zweiter Scanner dieses Objekt nicht detektiert, sondern über dieses hinwegmisst. Dies führt zu Inkonsistenzen in der Belegungswahrscheinlichkeit der entsprechenden Gridzelle, wodurch festgestellt werden kann, dass die Laserscanner auf unterschiedlichen Höhen eingebaut wurden.

Ebenso kann eine Verkippung eines Scanners auf diese Weise erkannt werden. Weiterhin lässt sich mittels dieses Verfahrens vorteilhaft feststellen, ob beispielsweise ein Laserscanner das Fahrzeug selbst detektiert, die Maskierung der Laserdaten also unzureichend ist. Ferner kann aus Artefakten in den Gridzellen auch beispielsweise auf Verschmutzung eines Sensors zurückgeschlossen werden.

### Bezugszeichenliste

- 10: Fahrzeug
- 11: Reifen mit Odometrie-Sensor
- 12, 13: Sensoren
- 14: Steuerung
- 21, 22, 23, 24, 25, 26: Objekte / Strukturen
- 31, 32, 33, 34: Schritte des Verfahrens

## Patentansprüche

1. Verfahren zum Ermitteln eines Kalibrierungsparameters eines Fahrzeugs (10), insbesondere eines fahrerlosen Transportfahrzeugs, wobei das Fahrzeug (10) zumindest einen ersten und einen zweiten Sensor (12, 13) aufweist, und wobei der Kalibrierungsparameter eine Bestimmung einer Position von zumindest einem der Sensoren relativ zu einem Koordinatenursprung des Fahrzeugs ermöglicht, wobei das Verfahren folgende Schritte aufweist:
- Erfassen von Strukturen (21, 22, 23, 24, 25, 26) mittels der zumindest zwei Sensoren (12, 13);
- Bestimmen, ob die erfassten Strukturen (21, 22, 23, 24, 25, 26) zumindest teilweise übereinstimmen;
- Berechnen einer relativen Position von zumindest dem ersten Sensor zum zweiten Sensor basierend auf den erfassten übereinstimmenden Strukturen, und danach
- Ermitteln des Kalibrierungsparameters unter Verwendung von zumindest der berechneten relativen Position von dem ersten Sensor zum zweiten Sensor
**gekennzeichnet durch**
das Berechnen einer Bewegung des Fahrzeugs (10) basierend auf den erfassten Strukturen (21, 22, 23, 24, 25, 26), wobei das Ermitteln des Kalibrierungsparameters ferner unter Verwendung dieser berechneten Bewegung des Fahrzeugs (10) erfolgt.

2. Verfahren nach Anspruch 1, ferner aufweisend ein Erfassen einer Bewegung des Fahrzeugs (10), und wobei das Ermitteln des Kalibrierungsparameters ferner unter Verwendung der erfassten Bewegung des Fahrzeugs (10) erfolgt, wobei die Erfassung einer Bewegung des Fahrzeugs (10) vorzugsweise auf Odometrie basiert.

3. Verfahren nach einem der vorangehenden Ansprüche, wobei das Ermitteln des Kalibrierungsparameters weiter unter Verwendung der erfassten Strukturen (21, 22, 23, 24, 25, 26) erfolgt.

4. Verfahren nach einem der vorangehenden Ansprüche, wobei die zumindest zwei Sensoren (12, 13) eingerichtet sind eine Abstandsmessung zu einer Umgebung des Fahrzeugs (10) durchzuführen, und wobei das Erfassen der Strukturen (21, 22, 23, 24, 25, 26) ein Durchführen einer Abstandsmessung zu der Umgebung des Fahrzeugs (10) umfasst, wobei die zumindest zwei Sensoren (12, 13) vorzugsweise Laserscanner, Stereo-Kameras und/oder Flugzeit-Kameras umfassen.

5. Verfahren nach einem der vorangehenden Ansprüche, wobei das Erfassen von Strukturen (21, 22, 23, 24, 25, 26) während eines Stillstandes des Fahrzeugs (10) durchgeführt wird.

6. Verfahren nach einem der vorangehenden Ansprüche, wobei anhand des Kalibrierungsparameters und einem oder mehrerer der Sensoren (12, 13) eine Position und eine Orientierung des Fahrzeugs (10) bestimmt werden kann.

7. Verfahren nach einem der vorangehenden Ansprüche, wobei das Bestimmen, ob die erfassten Strukturen (21, 22, 23, 24, 25, 26) zumindest teilweise übereinstimmen, ein Bestimmen umfasst, ob eine Überlappung der Sichtfelder der zumindest zwei Sensoren (12, 13) vorliegt.

8. Verfahren nach einem der vorangehenden Ansprüche, wobei der ermittelte Kalibrierungsparameter in einem weiteren Schritt mit zumindest einem bestehenden Kalibrierungsparameter verglichen wird.

9. Fahrzeug (10), und insbesondere ein fahrerloses Transportfahrzeug, welches zumindest einen ersten und einen zweiten Sensor (12, 13) aufweist, und wobei das Fahrzeug (10) ferner eine Steuerung (14) aufweist, welche eingerichtet ist ein Verfahren nach einem der Ansprüche 1 bis 8 durchzuführen.

10. Fahrzeug (10) nach Anspruch 9, wobei die zumindest zwei Sensoren (12, 13) eingerichtet sind eine Abstandsmessung zu einer Umgebung des Fahrzeugs (10) durchzuführen und wobei ein Sichtbereich des ersten Sensors mit einem Sichtbereich des zweiten Sensors zumindest teilweise übereinstimmt.

11. Fahrzeug (10) nach Anspruch 9 oder 10, wobei die zumindest zwei Sensoren (12, 13) Laserscanner, Stereo-Kameras und/oder Flugzeit-Kameras umfassen.

12. Fahrzeug (10) nach einem der Ansprüche 9 bis 11, weiter aufweisend zumindest einen Odometrie-Sensor zur Erfassen einer Bewegung des Fahrzeugs (10) basierend auf Odometrie.

## Claims

1. A method for determining a calibration parameter of a vehicle (10), in particular a driverless transport vehicle, the vehicle (10) having at least a first and a second sensor (12, 13), and the calibration parameter determining a position of at least one which enables sensors relative to a coordinate origin of the vehicle, the method comprising the following steps:
- detecting structures (21, 22, 23, 24, 25, 26) by means of the at least two sensors (12, 13);
- determining whether the detected structures (21, 22, 23, 24, 25, 26) match at least partially;
- calculating a relative position of at least the first sensor to the second sensor based on the detected matching patterns, and thereafter
- determining the calibration parameter using at least the calculated relative position from the first sensor to the second sensor
**characterized by**
the calculating a motion of the vehicle (10) based on the detected structures (21, 22, 23, 24, 25, 26), wherein determining the calibration parameter considers these calculated motion of the vehicle (10).

2. The method of claim 1, further comprising detecting a movement of the vehicle (10), and wherein the determination of the calibration parameter is further carried out using the detected movement of the vehicle (10), wherein the detection of a movement of the vehicle (10) is preferably based on Odometry.

3. Method according to one of the preceding claims, wherein the calibration parameter is further determined using the detected structures (21, 22, 23, 24, 25, 26).

4. Method according to one of the preceding claims, wherein the at least two sensors (12, 13) are set up to carry out a distance measurement to an environment of the vehicle (10), and wherein the detection of the structures (21, 22, 23, 24, 25, 26) performing a distance measurement to the surroundings of the vehicle (10), the at least two sensors (12, 13) preferably comprising laser scanners, stereo cameras and/or time-of-flight cameras.

5. Method according to one of the preceding claims, wherein the detection of structures (21, 22, 23, 24, 25, 26) is carried out during a standstill of the vehicle (10).

6. Method according to one of the preceding claims, wherein a position and an orientation of the vehicle (10) can be determined on the basis of the calibration parameter and one or more of the sensors (12, 13).

7. Method according to one of the preceding claims, wherein determining whether the detected structures (21, 22, 23, 24, 25, 26) match at least partially comprises determining whether an overlap of the fields of view of the at least two sensors (12, 13) is present.

8. Method according to one of the preceding claims, wherein the determined calibration parameter is compared in a further step with at least one existing calibration parameter.

9. Vehicle (10), and in particular a driverless transport vehicle, which has at least a first and a second sensor (12, 13), and wherein the vehicle (10) further comprises a controller (14) which is set up to carry out a method according to claim 1.

10. Vehicle (10) according to claim 9, wherein the at least two sensors (12, 13) are set up to carry out a distance measurement to an environment of the vehicle (10) and wherein a field of view of the first sensor corresponds at least partially to a field of view of the second sensor.

11. Vehicle (10) according to claim 9 or 10, wherein the at least two sensors (12, 13) comprise laser scanners, stereo cameras and/or time-of-flight cameras.

12. Vehicle (10) according to any one of claims 9 to 11, further comprising at least one odometry sensor for detecting a movement of the vehicle (10) based on odometry.

## Revendications

1. Procédé pour déterminer un paramètre d'étalonnage d'un véhicule (10), en particulier un véhicule de transport sans conducteur, le véhicule (10) comportant au moins un premier et un second capteur (12, 13), et le paramètre d'étalonnage déterminant une position d'au moins un qui active des capteurs par rapport à une origine de coordonnées du véhicule, le procédé comprenant les étapes suivantes:
détection des structures (21, 22, 23, 24, 25, 26) au moyen des au moins deux capteurs (12, 13);
- déterminer si les structures détectées (21, 22, 23, 24, 25, 26) correspondent au moins partiellement;
- calculer une position relative d'au moins le premier capteur par rapport au second capteur sur la base des motifs d'appariement détectés, et ensuite
- déterminer le paramètre d'étalonnage en utilisant au moins la position relative calculée du premier capteur au second capteur
**caractérisé par**
le calcul d'un mouvement du véhicule (10) sur la base des structures détectées (21, 22, 23, 24, 25, 26), dans lequel la détermination du paramètre d'étalonnage prend en compte ces mouvements calculés du véhicule (10).

2. Procédé selon la revendication 1, comprenant en outre la détection d'un mouvement du véhicule (10), et dans lequel la détermination du paramètre d'étalonnage est en outre effectuée en utilisant le mouvement détecté du véhicule (10), dans lequel la détection d'un mouvement de le véhicule (10) est de préférence basé sur l'odométrie.

3. Procédé selon l'une des revendications précédentes, dans lequel le paramètre d'étalonnage est en outre déterminé à l'aide des structures détectées (21, 22, 23, 24, 25, 26).

4. Procédé selon l'une des revendications précédentes, dans lequel les au moins deux capteurs (12, 13) sont mis en place pour effectuer une mesure de distance à un environnement du véhicule (10), et dans lequel la détection des structures (21 , 22, 23, 24, 25, 26) effectuant une mesure de distance à l'environnement du véhicule (10), les au moins deux capteurs (12, 13) comprenant de préférence des scanners laser, des caméras stéréo et / ou le temps de vol appareils photo.

5. Procédé selon l'une des revendications précédentes, dans lequel la détection des structures (21, 22, 23, 24, 25, 26) est réalisée lors d'un arrêt du véhicule (10).

6. Procédé selon l'une des revendications précédentes, dans lequel une position et une orientation du véhicule (10) peuvent être déterminées à partir du paramètre d'étalonnage et d'un ou plusieurs des capteurs (12, 13).

7. Procédé selon l'une des revendications précédentes, dans lequel la détermination de l'adéquation au moins partielle des structures détectées (21, 22, 23, 24, 25, 26) comprend la détermination d'un chevauchement des champs de vision des au moins deux capteurs. (12, 13) est présent.

8. Procédé selon l'une des revendications précédentes, dans lequel le paramètre d'étalonnage déterminé est comparé dans une étape supplémentaire avec au moins un paramètre d'étalonnage existant.

9. Véhicule (10), et en particulier un véhicule de transport sans conducteur, qui comporte au moins un premier et un deuxième capteur (12, 13), et dans lequel le véhicule (10) comprend en outre un contrôleur (14) qui est configuré pour mettre en oeuvre un procédé selon la revendication 1.

10. Véhicule (10) selon la revendication 9, dans lequel les au moins deux capteurs (12, 13) sont mis en place pour effectuer une mesure de distance à un environnement du véhicule (10) et dans lequel un champ de vision du premier capteur correspond au moins partiellement à un champ de vision du deuxième capteur.

11. Véhicule (10) selon la revendication 9 ou 10, dans lequel les au moins deux capteurs (12, 13) comprennent des scanners laser, des caméras stéréo et / ou des caméras de temps de vol.

12. Véhicule (10) selon l'une quelconque des revendications 9 à 11, comprenant en outre au moins un capteur d'odométrie pour détecter un mouvement du véhicule (10) basé sur l'odométrie.
